# EUROPÄISCHE PATENTSCHRIFT

(11) **EP 4 251 374 B1**
(45) Veröffentlichungstag und Bekanntmachung des Hinweises auf die Patenterteilung: **11.09.2024**
(21) Anmeldenummer: 21806256.0
(22) Anmeldetag: 09.11.2021
(51) Int. Cl.: B25F 5/00, H02J 3/01, H02K 11/02

(54) **HANDWERKZEUGMASCHINE**
MANUAL MACHINE TOOL
MACHINE-OUTIL PORTATIVE

(30) Priorität: 27.11.2020 EP 20210255
(43) Veröffentlichungstag der Anmeldung: 04.10.2023
(73) Patentinhaber: Hilti Aktiengesellschaft, 9494 Schaan (LI)
(72) Erfinder: FORSTNER, Markus, 86899 Landsberg (DE); BRAML, Georg, 86899 Landsberg (DE); RINGLER, Stefan, 86853 Schwabmühlhausen (DE)
(74) Vertreter: Hilti Aktiengesellschaft Corporate Intellectual Property
(86) Internationale Anmeldenummer: PCT/EP2021/081064
(87) Internationale Veröffentlichungsnummer: WO 2022/111988

(56) Entgegenhaltungen:
- EP-A1- 3 276 821
- EP-A1- 3 427 899
- DE-U1- 212015 000 143

## Beschreibung

### GEBIET DER ERFINDUNG

Die vorliegende Erfindung betrifft eine Handwerkzeugmaschine, insbesondere eine elektrische Handwerkzeugmaschine, wie zum Beispiel einen Elektroschrauber.

Elektrisch betriebene Handwerkzeugmaschinen weisen häufig einen Elektromotor auf, der von einer elektrischen Energiequelle mit Energie versorgt wird. Im Betrieb der Handwerkzeugmaschine können in dem Ansteuerschaltkreis hochfrequente Störspannungen oder Störströme auftreten. Diese können beispielsweise mit einem Entstörkondensator gegen Masse kurzgeschlossen werden, um so die Erzeugung von elektromagnetischen Störsignalen zu reduzieren oder zu verhindern.

In herkömmlichen Handwerkzeugmaschinen ist der Entstörkondensator aus Platzgründen beispielsweise bei dem Hauptschalter in dem Handgriff integriert und direkt mit dem Phasenleiter, der den Strom für den Elektromotor führt, und mit dem Neutralleiter verkabelt. Dies erfordert einen hohen Verkabelungsaufwand.

Weitere bekannte Handwerkzeugmaschinen sind in der EP 3 427 899 A1, die die Präambel des Hauptanspruches offenbart, und der DE 21 2015 000 143 U1 offenbart.

Vor diesem Hintergrund ist es eine Aufgabe der vorliegenden Erfindung, die Erzeugung von elektromagnetischen Störsignalen und einen Verkabelungsaufwand zu reduzieren.

### OFFENBARUNG DER ERFINDUNG

Demgemäß wird eine Handwerkzeugmaschine mit einer Ansteuerschaltung zum Bereitstellen eines Einstellsignals in Abhängigkeit einer Betätigung eines Tasters und einer Steuervorrichtung zum Einstellen eines Antriebsstroms für einen Elektromotor der Handwerkzeugmaschine in Abhängigkeit des Einstellsignals vorgeschlagen. Die Steuervorrichtung ist über eine erste elektrische Leitungsanordnung mit einer elektrischen Energiequelle zum Betreiben der Handwerkzeugmaschine verbunden und die Ansteuerschaltung ist über eine zweite elektrische Leitungsanordnung mit der Steuervorrichtung verbunden. Eine den Antriebsstrom für den Elektromotor führende Antriebsstromleitung ist über einen mit dem Taster gekoppelten Unterbrechungsschalter zum Unterbrechen des Antriebsstroms geführt, wobei ein Entstörkondensator über einen ersten Knoten mit der Antriebsstromleitung und über einen zweiten Knoten mit der zweiten elektrischen Leitungsanordnung verbunden ist.

Diese Handwerkzeugmaschine weist den Vorteil auf, dass ein Verkabelungsaufwand gegenüber herkömmlichen Lösungen reduziert ist. Aufgrund der Anbindung des Entstörkondensators über die zweite elektrische Leitungsanordnung kann auf eine separate Leitung, die den Entstörkondensator mit einem Neutralleiter der elektrischen Energiequelle verbindet, verzichtet werden. Damit entfallen auch Stecker oder Buchsen, die zur Durchführung einer solchen Leitung durch gehäuseinterne Wände notwendig sein können.

Die Handwerkzeugmaschine kann als ein netzbetriebenes Gerät, das im Betrieb mit einem Stromnetz verbunden sein muss, oder auch als ein netzunabhängig betriebenes Gerät, das beispielsweise über einen Akkumulator mit Energie versorgt wird, ausgebildet sein.

Die Handwerkzeugmaschine ist beispielsweise als eine Bohrmaschine, ein Schlagbohrschrauber, ein Bohrhammer, ein Abbruchhammer, eine Schleifmaschine, ein Trennschleifer, ein Rührwerk oder eine Säge ausgebildet. Diese Liste ist lediglich beispielhaft und nicht abschließend zu verstehen.

Der Taster ist beispielsweise als nacheilender Taster ausgebildet, bei dem ein dauerhafter Druck benötigt wird, um betätigt zu sein. Der Taster kann auch als Ein-Aus-Schalter, als Hauptschalter, als Drehmomentregler oder dergleichen bezeichnet werden. Der Taster wird zum Betreiben der Handwerkzeugmaschine durch den Nutzer der Handwerkzeugmaschine betätigt.

Die Ansteuerschaltung stellt das Einstellsignal in Abhängigkeit einer Betätigung des Tasters bereit. Das Einstellsignal kann auch als Drehzahlsollwert, Drehzahlregelungssignal, Steuersignal oder dergleichen bezeichnet werden.

Das Einstellsignal kann eine Mehrzahl diskreter Stufen umfassen und/oder das Einstellsignal kann kontinuierlich sein. Das Einstellsignal entspricht beispielsweise einem Wert zwischen 0% und 100% für den Antriebsstrom. Das Einstellsignal wird insbesondere in Abhängigkeit eines auf den Taster ausgeübten Drucks ermittelt. Der Taster weist beispielsweise einen bestimmten Betätigungsweg auf, beispielsweise kann der Taster um bis zu 10 mm eingedrückt werden, wobei das Einstellsignal beispielsweise proportional zu einer aktuellen Tasterposition ist.

Die Steuervorrichtung ist über die erste elektrische Leitungsanordnung mit der elektrischen Energiequelle verbunden. Die Steuervorrichtung umfasst hierzu insbesondere eine Treiberschaltung. Die elektrische Energiequelle ist beispielsweise ein elektrisches Stromnetz oder ein Akkumulator. Die erste elektrische Leitungsanordnung umfasst wenigstens zwei gegeneinander isolierte Leiter, insbesondere einen Phasenleiter und einen Neutralleiter. Zusätzlich kann ein Schutzleiter vorgesehen sein. Über die erste elektrische Leitungsanordnung wird die Handwerkzeugmaschine auch dann mit elektrischer Energie versorgt, wenn der Taster nicht betätigt ist. Damit können beispielswiese integrierte Schaltungen, Anzeigeelemente, und/oder weitere periphere Elemente dauerhaft mit Strom versorgt werden.

Der Elektromotor der Handwerkzeugmaschine wird jedoch nur dann mit elektrischer Energie versorgt, wenn der Taster betätigt wird. Der Unterbrechungsschalter dient hierbei als eine Sicherheitseinrichtung, die den Antriebsstrom komplett unterbricht, sobald der Taster nicht mehr betätigt wird oder einen Betätigungsschwellwert unterschreitet. Der Unterbrechungsschalter ist vorzugsweise mechanisch direkt mit dem Taster gekoppelt. Die Antriebsstromleitung ist eine zusätzliche Stromleitung, die zwischen Steuervorrichtung und dem Unterbrechungsschalter einerseits und zwischen dem Unterbrechungsschalter und der elektrischen Energiequelle andererseits verläuft.

Die Höhe des Antriebsstroms wird von der Steuervorrichtung in Abhängigkeit des Einstellsignals eingestellt. Man kann auch sagen, dass der Antriebsstrom von der Steuervorrichtung gesteuert oder geregelt wird. Wenn das Einstellsignal 100% beträgt, wird der Elektromotor mit der maximalen elektrischen Leistung versorgt. Dann hat der Elektromotor beispielsweise das höchste Drehmoment und/oder die höchste Drehzahl.

Der Entstörkondensator ist zwischen die Antriebsstromleitung und die zweite elektrische Leitungsanordnung geschaltet. Die Verbindung mit der zweiten elektrischen Leitungsanordnung kann hierbei direkt oder über eine zwischengeschaltete Schaltung, wie beispielsweise die Ansteuerschaltung, erfolgen. Das für die Funktion des Entstörkondensators notwendige Potential kann hierbei beispielsweise durch die Ansteuerschaltung durchgeschleift sein.

Gemäß einer Ausführungsform der Handwerkzeugmaschine ist der Entstörkondensator unmittelbar mit der zweiten elektrischen Leitungsanordnung verbunden.

"Unmittelbar verbunden" bedeutet insbesondere, dass kein aktives oder passives elektrisches Bauteil zwischen dem Entstörkondensator und der zweiten elektrischen Leitungsanordnung angeordnet ist. Wenn der Entstörkondensator über eine durch die Ansteuerschaltung durchgeschleifte Leitung mit der zweiten elektrischen Leitungsanordnung verbunden ist, gilt dies ebenfalls als "unmittelbar verbunden".

In Ausführungsformen ist der Entstörkondensator über eine separate Leitung unmittelbar mit der zweiten elektrischen Leitungsanordnung verbunden. Diese Ausführungsform schließt eine Verbindung über eine durchgeschleifte Leitung aus.

Gemäß einer weiteren Ausführungsform der Handwerkzeugmaschine ist der Entstörkondensator über die zweite elektrische Leitungsanordnung mit einem Neutralleiter-Potential oder mit einem Massepotential verbunden.

Das Neutralleiter-Potential bezieht sich insbesondere auf ein Phasenleiter-Potential eines elektrischen Stromnetzes. Die Antriebsstromleitung ist entsprechend an den Phasenleiter des Stromnetzes gekoppelt.

Gemäß einer weiteren Ausführungsform der Handwerkzeugmaschine ist der Unterbrechungsschalter über einen ersten Abschnitt der Antriebsstromleitung mit der Steuervorrichtung verbunden und über einen zweiten Abschnitt der Antriebsstromleitung mit der elektrischen Energiequelle verbunden, wobei der Entstörkondensator über den ersten Knoten mit dem zweiten Abschnitt der Antriebsstromleitung verbunden ist.

Damit ist der Entstörkondensator auf Seiten der elektrischen Energiequelle gekoppelt. Dies hat den Vorteil, dass bei einem Öffnen des Unterbrechungsschalters eine in dem Entstörkondensator gespeicherte Ladung in die elektrische Energiequelle abfließen kann. Eine Störung, Beeinträchtigung oder Beschädigung von Elementen in der Handwerkzeugmaschine kann damit vermieden werden.

Gemäß einer weiteren Ausführungsform der Handwerkzeugmaschine ist der Unterbrechungsschalter in Abhängigkeit einer Betätigung des Tasters geöffnet oder geschlossen.

Beispielsweise wird der Unterbrechungsschalter bei einer Betätigung des Tasters um 10% - 20 % geschlossen. Bei einem Taster mit 10 mm Einstellweg entspricht dies einer Betätigung um 1 mm - 2mm.

Gemäß einer weiteren Ausführungsform der Handwerkzeugmaschine sind die Ansteuerschaltung, der Taster, der Entstörkondensator und der Unterbrechungsschalter Teil eines gemeinsamen Bauteils.

Das gemeinsame Bauteil umfasst insbesondere eine gemeinsame Befestigungseinheit, beispielsweise eine Montageplatte oder dergleichen.

Insbesondere können die Ansteuerschaltung, der Entstörkondensator und der Unterbrechungstaster in einem Gehäuse angeordnet sein, wobei der Taster derart an dem Gehäuse angeordnet ist, dass dieser von außen betätigbar ist. Das Gehäuse kann vorzugsweise Buchsen oder Stecker aufweisen, über welche die zweite elektrische Leitungsanordnung sowie die Antriebsstromleitung in das Gehäuse geführt sind.

Gemäß einer weiteren Ausführungsform der Handwerkzeugmaschine umfasst die Ansteuerschaltung eine Platine, auf welcher zumindest eine mit dem Taster gekoppelte Erfassungseinheit zum Erfassen der Betätigung des Tasters integriert ist.

Die Erfassungseinheit ist insbesondere zum Erfassen einer aktuellen Position des Tasters und zum Ausgeben des Einstellsignals in Abhängigkeit der erfassten aktuellen Position eingerichtet.

Die Erfassungseinheit umfasst beispielsweise einen Spannungsteiler, der ein analoges Spannungssignal in Abhängigkeit einer Eingangsspannung und der aktuellen Position ausgibt. Zusätzlich und/oder alternativ kann die Erfassungseinheit einen digitalen Umsetzer umfassen, der das Einstellsignal in Form eines Tastverhältnisses ausgibt. Hierbei kann die aktuelle Position des Tasters beispielsweise optisch oder magnetisch erfasst werden.

Gemäß einer weiteren Ausführungsform der Handwerkzeugmaschine ist der Entstörkondensator auf der Platine integriert.

Dies reduziert den Verkabelungsaufwand noch weiter.

Gemäß einer weiteren Ausführungsform der Handwerkzeugmaschine ist der Entstörkondensator als ein SMD-Bauteil ausgebildet.

Damit kann die Platine vorzugsweise vollautomatisch bestückt werden, was einen Herstellungsprozess für die Handwerkzeugmaschine weiter verbessert.

Gemäß einer weiteren Ausführungsform der Handwerkzeugmaschine ist die Ansteuerschaltung in einem Handgriff der Handwerkzeugmaschine integriert und der Taster ist von außen an dem Handgriff betätigbar.

Insbesondere sind der Unterbrechungsschalter und der Entstörkondensator mit der Ansteuerschaltung ebenfalls in dem Handgriff angeordnet.

Gemäß einer weiteren Ausführungsform der Handwerkzeugmaschine ist die Steuervorrichtung zum Bereitstellen einer Betriebsspannung für die Ansteuerschaltung über die zweite elektrische Leitungsanordnung eingerichtet.

Die Ansteuerschaltung wird beispielsweise mit einer Niederspannung betrieben, die beispielsweise in einem Bereich zwischen 1 V - 20 V liegt.

Gemäß einer weiteren Ausführungsform der Handwerkzeugmaschine nach umfasst die zweite elektrische Leitungsanordnung Leitungen mit einem maximalen Querschnitt von 1 mm², bevorzugt 0,5 mm², weiter bevorzugt 0,33 mm².

Da über die zweite elektrische Leitungsanordnung nur geringe Ströme übertragen werden, können Leitungen mit einem dünnen Querschnitt verwendet werden, was den Materialaufwand reduziert.

Gemäß einer weiteren Ausführungsform der Handwerkzeugmaschine weist die Antriebsstromleitung einen Leitungsquerschnitt zwischen 1,5 mm² - 5 mm² auf.

Über diese Leitung lassen sich hohe Ströme und hohe Leistungen übertragen, was für den Betrieb des Elektromotors von Vorteil ist, um ein hohes Drehmoment zu erzeugen.

Gemäß einer weiteren Ausführungsform der Handwerkzeugmaschine weist der Entstörkondensator eine Kapazität zwischen 0,1 - 1 µF auf.

Gemäß einer weiteren Ausführungsform der Handwerkzeugmaschine ist der Entstörkondensator als ein Klasse X1 oder ein Klasse X2 Kondensator ausgebildet.

Klasse X1 Kondensatoren sind für Spannungsspitzen zwischen 2500 - 4000 V ausgelegt und Klasse X2 Kondensatoren sind für Spannungsspitzen bis 2500 V ausgelegt.

### KURZE BESCHREIBUNG DER FIGUREN

Die nachfolgende Beschreibung erläutert die Erfindung anhand von exemplarischen Ausführungsformen und Figuren. In den Figuren zeigt:
- Fig. 1: eine schematische Ansicht einer Handwerkzeugmaschine; und
- Fig. 2: eine schematische Ansicht einer internen Verdrahtung einer Handwerkzeugmaschine.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

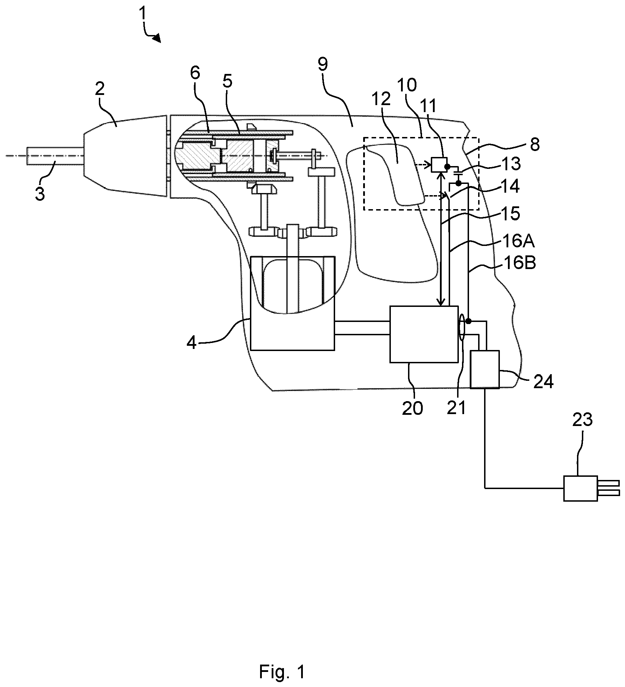

Fig. 1 zeigt schematisch eine Handwerkzeugmaschine 1, die in diesem Beispiel als Bohrhammer ausgebildet ist. Der Bohrhammer 1 hat eine Werkzeugaufnahme 2, in welche als Werkzeug ein Bohrmeißel 3 eingesetzt werden kann. Ein primärer Antrieb des Bohrhammers 1 bildet ein Elektromotor 4, welcher ein Schlagwerk 5 und eine Antriebswelle 6 antreibt. Ein Anwender kann den Bohrhammer 1 mittels eines Handgriffs 8 führen und mittels eines Tasters 12 den Bohrhammer 1 in Betrieb nehmen. Im Betrieb dreht der Bohrhammer 1 den Bohrmeißel 3 kontinuierlich um eine Arbeitsachse und kann dabei den Bohrmeißel 3 längs der Arbeitsachse in einen Untergrund schlagen.

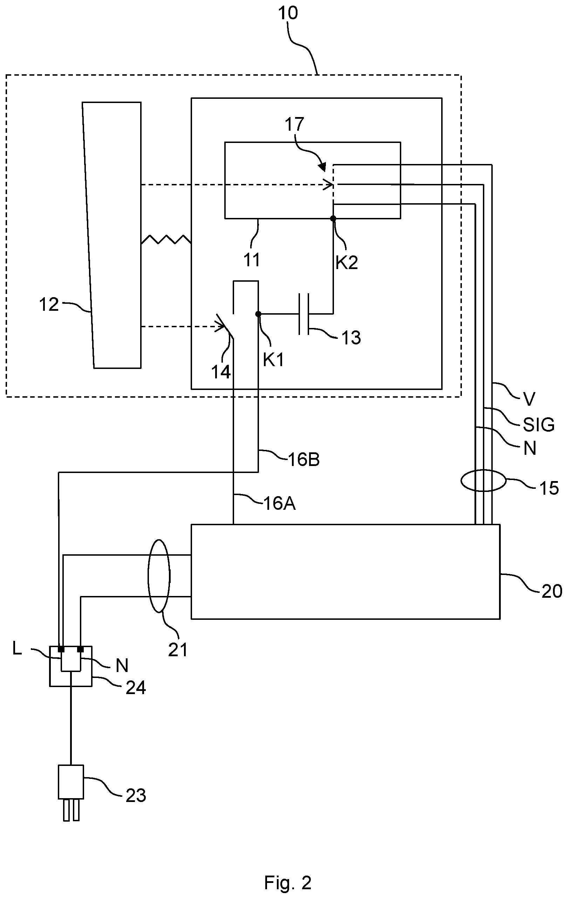

In dem Handgriff 8 ist eine elektrische Anordnung 10 angeordnet, die verschiedene Funktionen erfüllt. Eine Ansteuerschaltung 11 ist zum Bereitstellen eines Einstellsignals SIG (siehe Fig. 2) in Abhängigkeit einer Betätigung des Tasters 12 eingerichtet. Hierzu ist die Ansteuerschaltung 11 mittels der zweiten elektrischen Leitungsanordnung 15 mit einer Steuervorrichtung 20 gekoppelt. Über die zweite elektrische Leitungsanordnung 15 wird insbesondere des Einstellsignal SIG übertragen. Die Ansteuerschaltung 11 stellt das Einstellsignal SIG in Abhängigkeit einer aktuellen Position des Tasters 12 bereit, der insbesondere als ein nacheilender Taster ausgebildet ist. Man kann die Kombination aus dem Taster 12 und der Ansteuerschaltung 11 auch als Drehzahlsteuerung bezeichnen. Die elektrische Anordnung 10 umfasst weiterhin einen Unterbrechungsschalter 14, der in einer den Antriebsstrom für den Elektromotor 4 führenden Antriebsstromleitung 16A, 16B angeordnet ist. Der Unterbrechungsschalter 14 ist mit dem Taster 12 gekoppelt und ist in Abhängigkeit einer Betätigung des Tasters 12 geöffnet oder geschlossen. Mit dem Unterbrechungsschalter 14 ist sichergestellt, dass der Elektromotor 4 nur mit Strom versorgt wird, wenn der Taster 12 betätigt wird. Zudem umfasst die Anordnung 10 einen Entstörkondensator 13, der einerseits mit der Antriebsstromleitung 16A, 16B und andererseits mit der zweiten elektrischen Leitungsanordnung 15 verbunden ist. In diesem Beispiel ist die Verbindung mit der zweiten elektrischen Leitungsanordnung 15 über die Ansteuerschaltung 11 realisiert.

Die Werkzeugaufnahme 2 hat eine Hülse, in welche ein Ende des Bohrmeißels 3 eingesteckt werden kann. Das Drehmoment wird von dem Elektromotor 4 bereitgestellt und über einen Antriebsstrang an die Hülse weitergeleitet. Der Antriebsstrang beinhaltet beispielsweise die Abtriebswelle 6 und ein Getriebe zwischen Motor 4 und der Antriebswelle 6. Das Getriebe kann beispielsweise eine Drehzahl des Motors 4 auf eine gewünschte Drehzahl des Bohrmeißels 3 anpassen.

Die Drehzahl und/oder das Drehmoment des Elektromotors 4 wird durch eine Steuervorrichtung 20 in Abhängigkeit des Einstellsignals SIG eingestellt. Man kann auch sagen, dass die Steuervorrichtung 20 den Elektromotor steuert und/oder auf einen Sollwert regelt. Die Steuervorrichtung 20 ist über eine erste elektrische Leitungsanordnung 21 mit einem Anschlussterminal 24 gekoppelt, welches mittels eines Steckers 23 mit einem Stromnetz (nicht gezeigt) gekoppelt werden kann. Alternativ kann der Bohrhammer 1 auch über einen Akkumulator (nicht gezeigt) mit Strom versorgt werden. Eine Leistungsaufnahme des Elektromotors 4 im Betrieb, der Betriebswert, entspricht vorzugweise etwa der Nennleistung des Elektromotors 4, wodurch ein optimales Verhältnis von Leistung und Gewicht erhalten wird. Der Elektromotor 4 ist insbesondere ein mechanisch kommutierender Universalmotor und/oder ein elektronisch kommutierender Motor.

Fig. 2 zeigt eine schematische Ansicht eines Ausführungsbeispiels einer inneren Verdrahtung einer Handwerkzeugmaschine 1, beispielsweise des Bohrhammers 1 der Fig. 1. Es handelt sich beispielsweise um eine netzbetriebene Handwerkzeugmaschine 1, die über einen Stecker 23 mit einem Stromnetz (nicht gezeigt) verbunden werden kann. Über ein Anschlussterminal 24, das insbesondere in einem Gehäuse 9 (siehe Fig. 1) der Handwerkzeugmaschine 1 angeordnet ist, wird in diesem Beispiel ein Phasenleiter L und ein Neutralleiter N bereitgestellt.

Eine Steuervorrichtung 20 ist über eine erste elektrische Leitungsanordnung 21 mit dem Anschlussterminal 24 und den beiden Phasen L, N des Stromnetzes verbunden. Damit kann die Steuervorrichtung 20 mit elektrischer Energie versorgt werden, sobald der Stecker 23 mit dem Stromnetz gekoppelt ist. Die erste elektrische Leitungsanordnung 21 umfasst Leitungen mit einem Querschnitt von bis zu 5 mm². Die Steuervorrichtung 20 umfasst beispielsweise einen Transformator (nicht gezeigt), der zum Erzeugen und Bereitstellen einer Niederspannung eingerichtet ist. Die Niederspannung beträgt beispielsweise einen oder mehrere Spannungswerte zwischen 1 V und 20 V. Mit der Niederspannung können beispielsweise integrierte Bauelemente, wie eine Steuereinheit (ASIC: application specific integrated circuit, PLC: programmable logic controller, CPU: central processing unit), Speichereinheiten (ROM: read only memory, RAM: random access memory), Anzeigevorrichtungen (LCD: liquid crystal display), Beleuchtungseinrichtungen (LED: light emitting diode) und dergleichen betrieben werden.

Insbesondere ist eine Ansteuerschaltung 11 über eine zweite elektrische Leitungsanordnung 15 mit der Steuervorrichtung 20 verbunden und wird über diese mit der Niederspannung gespeist. Die zweite elektrische Leitungsanordnung 15 umfasst in diesem Beispiel drei separate Leitungen N, V, SIG, wobei die Leitungen N und V den Polen der Niederspannung entsprechen und über die dritte Leitung das Einstellsignal SIG übertragen wird. In diesem Beispiel bezieht sich die Niederspannung auf das Neutralleiter-Potential des Stromnetzes, was jedoch nicht zwingend der Fall sein muss. In Ausführungsformen können noch weitere Leitungen vorgesehen sein, beispielsweise um zusätzliche Potentiale bereitzustellen. Die Ansteuerschaltung 11 ist mit einem Taster 12 gekoppelt und ist zum Bereitstellen des Einstellsignals SIG in Abhängigkeit eine Betätigung des Tasters 12 eingerichtet. Hierzu umfasst die Ansteuerschaltung 11 insbesondere eine Erfassungseinheit 17, die in diesem Beispiel als Spannungswandler ausgebildet ist. Die Leitungen N, V, SIG der zweiten elektrischen Leitungsanordnung 15 weisen beispielsweise einen Leitungsquerschnitt von 0,33 mm² auf.

Der Taster 12 ist ferner mit einem Unterbrechungsschalter 14 gekoppelt. Wenn der Taster 12 betätigt wird, beispielsweise um 10% eingedrückt wird, schließt der Unterbrechungsschalter 14. Der Unterbrechungsschalter 14 ist über einen ersten Abschnitt 16A der Antriebsstromleitung mit der Steuervorrichtung 20 verbunden und über einen zweiten Abschnitt 16B der Antriebsstromleitung mit dem Anschlussterminal 24 und dem Phasenleiter L des Stromnetzes verbunden. Die Antriebsstromleitung 16A, 16B weist einen Querschnitt von 3 mm² auf. Über einen ersten Knoten K1 ist ein Entstörkondensator 13 mit dem zweiten Abschnitt 16B der Antriebsstromleitung verbunden und über einen zweiten Knoten K2 ist der Entstörkondensator 13 mit der zweiten elektrischen Leitungsanordnung 15, in diesem Beispiel mit dem Neutralleiter-Potential N verbunden, das durch die Ansteuerschaltung 11 durchgeschleift ist. Damit ist der Entstörkondensator 13, der eine Kapazität von 0,22 µF aufweist und einer Spitzenspannung von 4000 V standhält (Klasse X1), zum Filtern von hochfrequenten Spannungsschwankungen eingerichtet, die während des Betriebs des Elektromotors 4 (siehe Fig. 1) auftreten können.

Die Ansteuerschaltung 11, der Taster 12, der Entstörkondensator 13 und der Unterbrechungsschalter 14 bilden vorzugsweise ein gemeinsames Bauteil 10. In bevorzugten Ausführungsformen ist die Ansteuerschaltung 11 als eine Platine ausgebildet, wobei der Entstörkondensator 13 auf der Platine integriert ist, bevorzugt als ein SMD-Bauteil (SMD: surface-mounted device). Die Ansteuerschaltung 11 kann weitere elektronische Bauelemente aufweisen oder zu deren Betrieb eingerichtet sein, wie beispielsweise eine LED, einen Drehmomentsensor, einen Beschleunigungssensor, einen Temperatursensor und dergleichen mehr.

### BEZUGSZEICHENLISTE

- 1: Handwerkzeugmaschine (Bohrhammer)
- 2: Werkzeugaufnahme
- 3: Werkzeug
- 4: Motor
- 5: Schlagwerk
- 6: Antriebswelle
- 7: Akkumulator
- 8: Handgriff
- 9: Gehäuse
- 10: Anordnung
- 11: Ansteuerschaltung
- 12: Taster
- 13: Entstörkondensator
- 14: Unterbrechungsschalter
- 15: zweite elektrische Leitungsanordnung
- 16A: Abschnitt
- 16B: Abschnitt
- 17: Spannungsteiler
- 20: Steuervorrichtung
- 21: erste elektrische Leitungsanordnung
- 23: Stecker
- 24: Anschlussterminal

- K1: Knoten
- K2: Knoten
- L: Phasenleiter
- N: Neutralleiter
- SIG: Einstellsignal
- V: Niederspannungs-Potential

## Patentansprüche

1. Handwerkzeugmaschine (1), mit:
einer Ansteuerschaltung (11) zum Bereitstellen eines Einstellsignals (SIG) in Abhängigkeit einer Betätigung eines Tasters (12),
einer Steuervorrichtung (20) zum Einstellen eines Antriebsstroms für einen Elektromotor (4) der Handwerkzeugmaschine (1) in Abhängigkeit des Einstellsignals (SIG), wobei die Steuervorrichtung (20) über eine erste elektrische Leitungsanordnung (21) mit einer elektrischen Energiequelle zum Betreiben der Handwerkzeugmaschine (1) verbunden ist,
die Ansteuerschaltung (11) über eine zweite elektrische Leitungsanordnung (15) mit der Steuervorrichtung (20) verbunden ist,
eine den Antriebsstrom für den Elektromotor (4) führende Antriebsstromleitung (16A, 16B) über einen mit dem Taster (12) gekoppelten Unterbrechungsschalter (14) zum Unterbrechen des Antriebsstroms geführt ist,
**dadurch gekennzeichnet, dass** ein Entstörkondensator (13) über einen ersten Knoten (K1) mit der Antriebsstromleitung (16A, 16B) und über einen zweiten Knoten (K2) mit der zweiten elektrischen Leitungsanordnung (15) verbunden ist.

2. Handwerkzeugmaschine nach Anspruch 1, **dadurch gekennzeichnet, dass** der Entstörkondensator (13) unmittelbar mit der zweiten elektrischen Leitungsanordnung (15) verbunden ist.

3. Handwerkzeugmaschine nach Anspruch 1 oder 2, **dadurch gekennzeichnet, dass** der Entstörkondensator (13) über die zweite elektrische Leitungsanordnung (15) mit einem Neutralleiter-Potential (N) oder mit einem Massepotential verbunden ist.

4. Handwerkzeugmaschine nach einem der Ansprüche 1 - 3, **dadurch gekennzeichnet, dass** der Unterbrechungsschalter (14) über einen ersten Abschnitt (16A) der Antriebsstromleitung mit der Steuervorrichtung (20) verbunden ist und über einen zweiten Abschnitt (16B) der Antriebsstromleitung mit der elektrischen Energiequelle verbunden ist, wobei der Entstörkondensator (13) über den ersten Knoten (K1) mit dem zweiten Abschnitt (16B) der Antriebsstromleitung verbunden ist.

5. Handwerkzeugmaschine nach einem der Ansprüche 1 - 4, **dadurch gekennzeichnet, dass** der Unterbrechungsschalter (14) in Abhängigkeit einer Betätigung des Tasters (12) geöffnet oder geschlossen ist.

6. Handwerkzeugmaschine nach einem der Ansprüche 1 - 5, **dadurch gekennzeichnet, dass** die Ansteuerschaltung (11), der Taster (12), der Entstörkondensator (13) und der Unterbrechungsschalter (14) Teil eines gemeinsamen Bauteils (10) sind.

7. Handwerkzeugmaschine nach einem der Ansprüche 1 - 6, **dadurch gekennzeichnet, dass** die Ansteuerschaltung (11) eine Platine umfasst, auf welcher zumindest eine mit dem Taster (12) gekoppelte Erfassungseinheit (17) zum Erfassen der Betätigung des Tasters (12) integriert ist.

8. Handwerkzeugmaschine nach Anspruch 7, **dadurch gekennzeichnet, dass** der Entstörkondensator (13) auf der Platine integriert ist.

9. Handwerkzeugmaschine nach Anspruch 8, **dadurch gekennzeichnet, dass** der Entstörkondensator (13) als ein SMD-Bauteil ausgebildet ist.

10. Handwerkzeugmaschine nach einem der Ansprüche 1 - 9, **dadurch gekennzeichnet, dass** die Ansteuerschaltung (11) in einem Handgriff (8) der Handwerkzeugmaschine (1) integriert ist und der Taster (12) von außen an dem Handgriff (8) betätigbar ist.

11. Handwerkzeugmaschine nach einem der Ansprüche 1 - 10, **dadurch gekennzeichnet, dass** die Steuervorrichtung (20) zum Bereitstellen einer Betriebsspannung (V) für die Ansteuerschaltung (11) über die zweite elektrische Leitungsanordnung (15) eingerichtet ist.

12. Handwerkzeugmaschine nach einem der Ansprüche 1 - 11, **dadurch gekennzeichnet, dass** die zweite elektrische Leitungsanordnung (15) Leitungen mit einem maximalen Querschnitt von 1 mm², bevorzugt 0,5 mm², weiter bevorzugt 0,33 mm², umfasst.

13. Handwerkzeugmaschine nach einem der Ansprüche 1 - 12, **dadurch gekennzeichnet, dass** die Antriebsstromleitung (16A, 16B) einen Leitungsquerschnitt zwischen 1,5 mm² - 5 mm² aufweist.

14. Handwerkzeugmaschine nach einem der Ansprüche 1 - 13, **dadurch gekennzeichnet, dass** der Entstörkondensator (13) eine Kapazität zwischen 0,1 - 1 µF aufweist.

15. Handwerkzeugmaschine nach einem der Ansprüche 1 - 14, **dadurch gekennzeichnet**, **dadurch gekennzeichnet, dass** der Entstörkondensator (13) als ein Klasse X1 oder ein Klasse X2 Kondensator ausgebildet ist.

## Claims

1. Hand-held power tool (1) comprising:
an activation circuit (11) for providing an adjustment signal (SIG) depending on an actuation of a button (12),
a control device (20) for adjusting a drive current for an electric motor (4) of the hand-held power tool (1) depending on the adjustment signal (SIG), the control device (20) being connected via a first electrical line arrangement (21) to an electrical energy source for operating the hand-held power tool (1),
the activation circuit (11) being connected to the control device (20) via a second electrical line arrangement (15),
a drive current line (16A, 16B) carrying the drive current for the electric motor (4) being routed via an interrupter switch (14), coupled to the button (12), for interrupting the drive current,
**characterized in that** a suppression capacitor (13) is connected via a first node (K1) to the drive current line (16A, 16B) and via a second node (K2) to the second electrical line arrangement (15).

2. Hand-held power tool according to claim 1, **characterized in that** the suppression capacitor (13) is directly connected to the second electrical line arrangement (15).

3. Hand-held power tool according to either claim 1 or 2, **characterized in that** the suppression capacitor (13) is connected via the second electrical line arrangement (15) to a neutral conductor potential (N) or to a ground potential.

4. Hand-held power tool according to any of claims 1-3, **characterized in that** the interrupter switch (14) is connected via a first section (16A) of the drive current line to the control device (20) and is connected via a second section (16B) of the drive current line to the electrical energy source, the suppression capacitor (13) being connected via the first node (K1) to the second section (16B) of the drive current line.

5. Hand-held power tool according to any of claims 1-4, **characterized in that** the interrupter switch (14) is opened or closed depending on an actuation of the button (12).

6. Hand-held power tool according to any of claims 1-5, **characterized in that** the activation circuit (11), the button (12), the suppression capacitor (13) and the interrupter switch (14) are part of a common component (10).

7. Hand-held power tool according to any of claims 1-6, **characterized in that** the activation circuit (11) comprises a circuit board on which at least one detection unit (17), coupled to the button (12), for detecting the actuation of the button (12) is integrated.

8. Hand-held power tool according to claim 7, **characterized in that** the suppression capacitor (13) is integrated on the circuit board.

9. Hand-held power tool according to claim 8, **characterized in that** the suppression capacitor (13) is in the form of an SMD component.

10. Hand-held power tool according to any of claims 1-9, **characterized in that** the activation circuit (11) is integrated in a handle (8) of the hand-held power tool (1) and the button (12) can be actuated from the outside on the handle (8).

11. Hand-held power tool according to any of claims 1-10, **characterized in that** the control device (20) is designed to provide an operating voltage (V) for the activation circuit (11) via the second electrical line arrangement (15).

12. Hand-held power tool according to any of claims 1-11, **characterized in that** the second electrical line arrangement (15) comprises lines having a maximum cross section of 1 mm², preferably 0.5 mm², more preferably 0.33 mm².

13. Hand-held power tool according to any of claims 1-12, **characterized in that** the drive current line (16A, 16B) has a line cross section between 1.5 mm² - 5 mm².

14. Hand-held power tool according to any of claims 1-13, **characterized in that** the suppression capacitor (13) has a capacitance between 0.1 - 1 µF.

15. Hand-held power tool according to any of claims 1-14, **characterized in that** the suppression capacitor (13) is in the form of a class X1 or a class X2 capacitor.

## Revendications

1. Machine-outil portative (1), comportant :
un circuit de commande (11) permettant de fournir un signal de réglage (SIG) en fonction d'un actionnement d'une touche (12),
un dispositif de commande (20) permettant de régler un courant d'entraînement pour un moteur électrique (4) de la machine-outil portative (1) en fonction du signal de réglage (SIG), dans laquelle le dispositif de commande (20) est connecté à une source d'énergie électrique permettant de faire fonctionner la machine-outil portative (1) par l'intermédiaire d'un premier agencement de lignes électriques (21) électrique,
le circuit de commande (11) est connecté au dispositif de commande (20) par l'intermédiaire d'un second agencement de lignes électriques (15) électrique,
une ligne électrique de courant d'entraînement (16A, 16B) guidant le courant d'entraînement pour le moteur électrique (4) est guidée par l'intermédiaire d'un commutateur d'interruption (14) couplé à la touche (12) et permettant d'interrompre le courant d'entraînement,
**caractérisée en ce qu'**un condensateur antiparasite (13) est connecté par l'intermédiaire d'un premier noeud (K1) à la ligne électrique de courant d'entraînement (16A, 16B) et par l'intermédiaire d'un second noeud (K2) au second agencement de lignes électriques (15) électrique.

2. Machine-outil portative selon la revendication 1, **caractérisée en ce que** le condensateur antiparasite (13) est connecté directement au second agencement de lignes électriques (15) électrique.

3. Machine-outil portative selon la revendication 1 ou 2, **caractérisée en ce que** le condensateur antiparasite (13) est connecté par l'intermédiaire du second agencement de lignes électriques (15) électrique à un potentiel de conducteur neutre (N) ou à un potentiel de masse.

4. Machine-outil portative selon l'une des revendications 1 à 3, **caractérisée en ce que** le commutateur d'interruption (14) est connecté au dispositif de commande (20) par l'intermédiaire d'une première section (16A) de la ligne électrique de courant d'entraînement et est connecté à la source d'énergie électrique par l'intermédiaire d'une seconde section (16B) de la ligne électrique de courant d'entraînement, dans laquelle le condensateur antiparasite (13) est connecté à la seconde section (16B) de la ligne électrique de courant d'entraînement par l'intermédiaire du premier noeud (K1).

5. Machine-outil portative selon l'une des revendications 1 à 4, **caractérisée en ce que** le commutateur d'interruption (14) est ouvert ou fermé en fonction d'un actionnement de la touche (12).

6. Machine-outil portative selon l'une des revendications 1 à 5, **caractérisée en ce que** le circuit de commande (11), la touche (12), le condensateur antiparasite (13) et le commutateur d'interruption (14) font partie d'un composant (10) commun.

7. Machine-outil portative selon l'une des revendications 1 à 6, **caractérisée en ce que** le circuit de commande (11) comprend une carte de circuit imprimé sur laquelle est intégrée au moins une unité de détection (17) couplée à la touche (12) et permettant de détecter l'actionnement de la touche (12).

8. Machine-outil portative selon la revendication 7, **caractérisée en ce que** le condensateur antiparasite (13) est intégré sur la carte de circuit imprimé.

9. Machine-outil portative selon la revendication 8, **caractérisée en ce que** le condensateur antiparasite (13) est réalisé en tant que composant CMS.

10. Machine-outil portative selon l'une des revendications 1 à 9, **caractérisée en ce que** le circuit de commande (11) est intégré dans une poignée (8) de la machine-outil portative (1) et la touche (12) peut être actionnée depuis l'extérieur sur la poignée (8).

11. Machine-outil portative selon l'une des revendications 1 à 10, **caractérisée en ce que** le dispositif de commande (20) est configuré pour fournir une tension de fonctionnement (V) pour le circuit de commande (11) par l'intermédiaire du second agencement de lignes électriques (15) électrique.

12. Machine-outil portative selon l'une des revendications 1 à 11, **caractérisée en ce que** le second agencement de lignes électriques (15) électrique comprend des lignes électriques comportant une section transversale maximale de 1 mm², de préférence de 0,5 mm², plus préférablement de 0,33 mm².

13. Machine-outil portative selon l'une des revendications 1 à 12, **caractérisée en ce que** la ligne électrique de courant d'entraînement (16A, 16B) présente une section transversale de ligne électrique comprise entre 1,5 mm² et 5 mm².

14. Machine-outil portative selon l'une des revendications 1 à 13, **caractérisée en ce que** le condensateur antiparasite (13) présente une capacité comprise entre 0,1 et 1 µF.

15. Machine-outil portative selon l'une des revendications 1 à 14, **caractérisée en ce que** le condensateur antiparasite (13) est réalisé en tant que condensateur de classe X1 ou condensateur de classe X2.
